Europäisches Patentamt

European Patent Office

Office européen des brevets

(11) Numéro de publication: **0 310 477**
**A1**

## (12) DEMANDE DE BREVET EUROPEEN

(21) Numéro de dépôt: **88402376.3**

(22) Date de dépôt: **21.09.88**

(51) Int. Cl.⁴: **H 04 N 7/14**

(30) Priorité: **25.09.87 FR 8713315**

(43) Date de publication de la demande:
**05.04.89 Bulletin 89/14**

(84) Etats contractants désignés: **DE FR GB IT NL**

(71) Demandeur: **Guichard, Jacques**
**8/10 rue des Morillons**
**F-75015 Paris (FR)**

**Buchner, Georges**
**34, rue de Picpus**
**F-75012 Paris (FR)**

**Isckia, Alain**
**227 rue Julian Grimau**
**F-94400 Vitry S/Seine (FR)**

(72) Inventeur: **Guichard, Jacques**
**8/10 rue des Morillons**
**F-75015 Paris (FR)**

**Buchner, Georges**
**34, rue de Picpus**
**F-75012 Paris (FR)**

**Isckia, Alain**
**227 rue Julian Grimau**
**F-94400 Vitry S/Seine (FR)**

(74) Mandataire: **Martin, Jean-Jacques et al**
**Cabinet REGIMBEAU 26, Avenue Kléber**
**F-75116 Paris (FR)**

(54) **Terminal de communication visuelle et sonore comportant un dispositif d'éclairage d'appoint.**

(57) L'invention concerne un terminal de table pour communication visuelle et sonore, du type associé notamment à un poste téléphonique et comprenant, dans un boîtier (100), un moniteur à écran de visualisation (128), une caméra (132) munie d'une optique (130), un ensemble électronique de commande, de codage/décodage et d'interfaçage avec une ligne de transmission et des moyens de contrôle manuel.

Selon l'invention, pour compenser l'éclairement d'un interlocuteur dans un environnement à éclairage ambiant plongeant, et ainsi obtenir une image équilibrée dudit interlocuteur par ladite caméra, le terminal comprend en outre un dispositif d'éclairage d'appoint (160) ayant une direction générale d'émission (C) essentiellement inclinée vers le haut en direction de l'interlocuteur et des moyens de réglage du flux lumineux émis par ledit dispositif en fonction de l'éclairage ambiant.

FIG_4

EP 0 310 477 A1

## Description

## TERMINAL DE COMMUNICATION VISUELLE ET SONORE COMPORTANT UN DISPOSITIF D'ECLAIRAGE D'APPOINT.

La présente invention a trait au domaine des télécommunications, et concerne plus particulièrement un terminal de communication visuelle et sonore, tel qu'un visiophone, permettant à un interlocuteur de communiquer, par l'intermédiaire d'un réseau, avec un interlocuteur distant équipé d'un terminal analogue, par le son et également par l'image.

Un tel terminal comprend, de façon conventionnelle, une caméra munie d'une optique, un moniteur à écran de visualisation, un ensemble électronique de commande, de codage/décodage et d'interfaçage avec une ligne de transmission, et des moyens de contrôle manuel ou automatique.

L'ensemble des équipements ci-dessus est logé dans un boîtier ou coffret destiné le plus souvent à reposer sur une table devant laquelle l'interlocuteur est assis, bien que tout autre support puisse être envisagé.

Cependant, l'image obtenue avec la caméra d'un tel terminal présente un défaut majeur: étant donné que, en lumière du jour comme en lumière artificielle, l'éclairage ambiant provient le plus souvent d'au-dessus du sujet, il en résulte dans l'image captée par la caméra la présence d'ombres très marquées notamment sur le visage de l'interlocuteur, plus particulièrement au-dessous des yeux. Ces ombres sont inesthétiques, et cet effet est encore accentué par le fait que, pour des lignes de transmission à faible débit, la résolution de l'image est limitée à environ 150 x 200 pixels.

On connaît déjà dans la technique antérieure, par exemple par la demande de brevet européen n° 0 231 403, le brevet français n° 914 843 et le brevet américain n° 4 485 400, un terminal de type visiophone qui comprend une source lumineuse. Cependant, aucun des terminaux de ces brevets n'est à même de compenser les défauts d'images dûs à un éclairage ambiant plongeant.

La présente invention vise à pallier cet inconvénient de la technique antérieure et à proposer un terminal du type précité qui permette d'obtenir un éclairage relativement uniforme du visage de l'utilisateur, et par là une qualité d'image améliorée.

A cet effet, la présente invention concerne un terminal de table pour communication visuelle et sonore, du type associé notamment à un poste téléphonique et comprenant, dans un boîtier, un moniteur à écran de visualisation, une caméra munie d'une optique, un ensemble électronique de commande, de codage/décodage et d'interfaçage avec une ligne de transmission et des moyens de contrôle manuel, caractérisé en ce que pour compenser l'éclairement d'un interlocuteur dans un environnement à éclairage ambiant plongeant, et ainsi obtenir une image équilibrée dudit interlocuteur par ladite caméra, le terminal comprend en outre un dispositif d'éclairage d'appoint ayant une direction générale d'émission essentiellement inclinée vers le haut en direction de l'interlocuteur et des moyens de réglage du flux lumineux émis par ledit dispositif en fonction de l'éclairage ambiant.

D'autres aspects et avantages de la présente invention apparaîtront mieux à la lecture de la description détaillée suivante de modes de réalisation préférés de celle-ci, donnée à titre d'exemple non limitatif et faite en référence aux dessins annexés, sur lesquels :

- la figure 1 est une vue en perspective schématique d'un terminal selon une première forme de réalisation de l'invention;

- la figure 2 est une vue en perspective schématique d'un terminal selon une seconde forme de réalisation de l'invention;

- les figures 3a et 3b sont des vues en perspective schématique d'un terminal selon une troisième forme de réalisation de l'invention, respectivement dans une position de sommeil et une position d'utilisation;

- la figure 4 est une vue de côté partielle schématique, en coupe, d'une première forme de réalisation des moyens d'éclairage;

- la figure 5 est une vue de côté partielle schématique, en coupe, d'une seconde forme de réalisation des moyens d'éclairage;

- la figure 6 est une vue de côté partielle schématique, en coupe, d'une troisième forme de réalisation des moyens d'éclairage;

- la figure 7 est une vue de côté partielle schématique, en coupe, d'une quatrième forme de réalisation des moyens d'éclairage ;

- la figure 8 est une vue de côté partielle schématique, en coupe, d'un aménagement auxiliaire conforme à la présente invention;

- la figure 9 est une vue de côté partielle schématique, en coupe, d'un autre aménagement auxiliaire conforme à la présente invention;

- la figure 10 est une vue de dessus schématique en coupe partielle de la région supérieure d'un terminal conforme à l'invention, illustrant le problème de la position désaxée du sujet par rapport à la direction de visée de la caméra;

- la figure 11 est une vue de dessus schématique illustrant géométriquement la solution à ce problème conformément à la présente invention;

- la figure 12 est une vue de côté de la représentation de la figure 11, et

- la figure 13 est une vue de côté en coupe partielle illustrant certains détails du terminal des figures 3a et 3b.

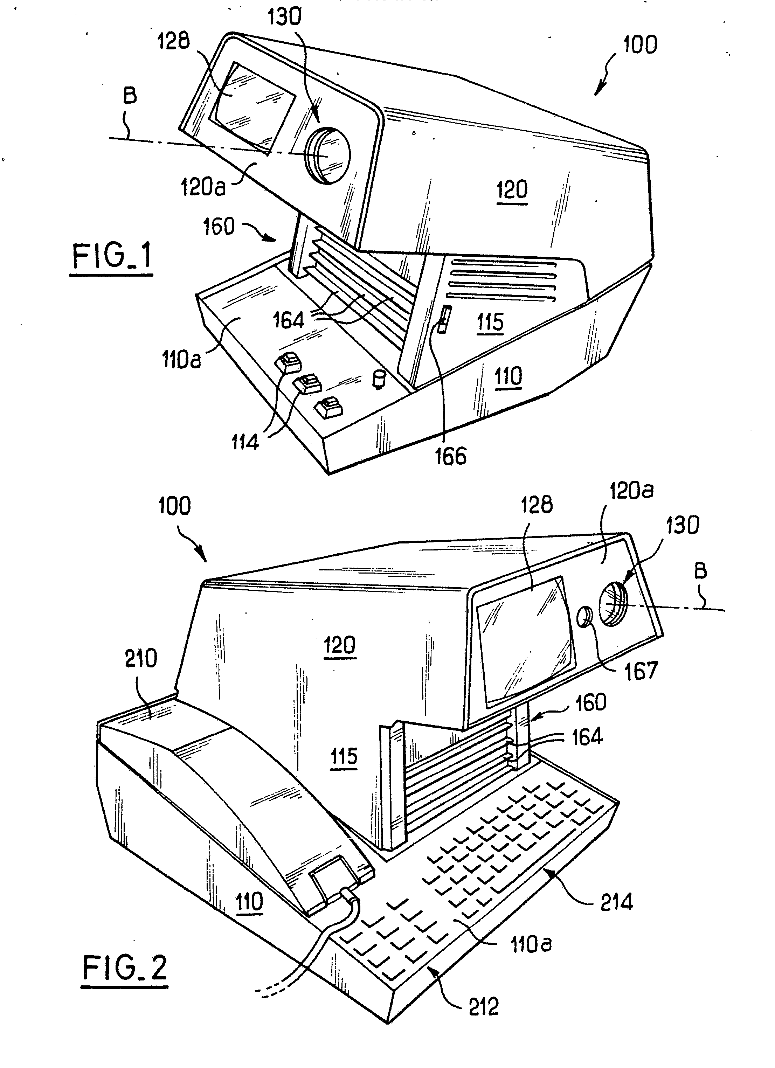

On a représenté sur la figure 1 un terminal qui comprend, un boîtier 100 constitué par une partie inférieure 110 essentiellement horizontale et une partie supérieure 120 d'inclinaison substantielle par rapport à la première, avec entre les deux une partie intermédiaire 115 de section transversale essentiellement trapézoïdale.

La face supérieure 110a de la partie 110 porte un ensemble de boutons de contrôle manuel 114, et ladite partie 110 abrite de préférence un ensemble électronique de commande et de codage/décodage pour les moyens vidéo (caméra et écran), et d'interfaçage avec une ligne de transmission.

L'écran 128 d'un moniteur de visualisation, par exemple à tube cathodique ou à cristaux liquides, et l'optique 130 d'une caméra vidéo, par exemple du type à senseur solide (type "Charge Coupled Device") sont disposés côte-à-côte dans la face avant 120a de la partie supérieure 120 du boîtier.

Cette configuration est préférée car elle permet d'effectuer la prise de vue de l'interlocuteur à une hauteur substantielle au-dessus de la table sur laquelle repose le terminal, et donc avec une direction de visée se rapprochant de l'horizontale, l'interlocuteur regardant dans le même temps l'écran, c'est-à-dire dans une direction voisine de l'optique de la caméra.

Conformément à un premier aspect essentiel de l'invention, le terminal comprend un dispositif d'éclairage d'appoint, globalement désigné par la référence 160, qui permet de diriger vers l'interlocuteur, et notamment vers son visage, un faisceau de rayonnement montant qui, en venant compléter l'éclairage ambiant de direction générale plongeante, élimine les ombres trop marquées, notamment au-dessous des yeux de l'utilisateur, pour améliorer la qualité de l'image transmise.

Dans la forme de réalisation de la figure 1, le dispositif 160 comprend une source lumineuse (non visible) telle qu'une lampe à incandescence, éventuellement à halogène ou une lampe à décharge, et un ensemble de volets horizontaux orientables 164 qui permettent de faire varier la direction et/ou l'intensité du faisceau. A cet effet, les volets sont montés pivotants dans les parois de la partie intermédiaire 115 du boîtier, et un bouton de manoeuvre 166 permet de faire varier l'inclinaison par l'intermédiaire d'une tringlerie appropriée (non représentée).

On a représenté sur la figure 2 un terminal analogue à celui de la figure 1, sur laquelle les mêmes numéros de référence désignent des parties ou éléments identiques ou similaires.

La différence majeure avec le terminal de la figure 1 réside en ce qu'il intègre en outre un poste téléphonique et un terminal de type videotex.

Il comporte à cet effet un combiné téléphonique 210 et reposant sur un prolongement latéral de la partie 110 du boîtier, un clavier de numérotation 212 ainsi qu'un clavier alphanumérique 214 prévus sur la face supérieure 110a de ladite partie 110.

On peut observer également sur la figure 2 qu'une cellule photosensible 167, telle qu'une photorésistance ou une photodiode, est prévue dans la face avant 120a à proximité de l'optique 130 de la caméra, à des fins expliquées plus loin.

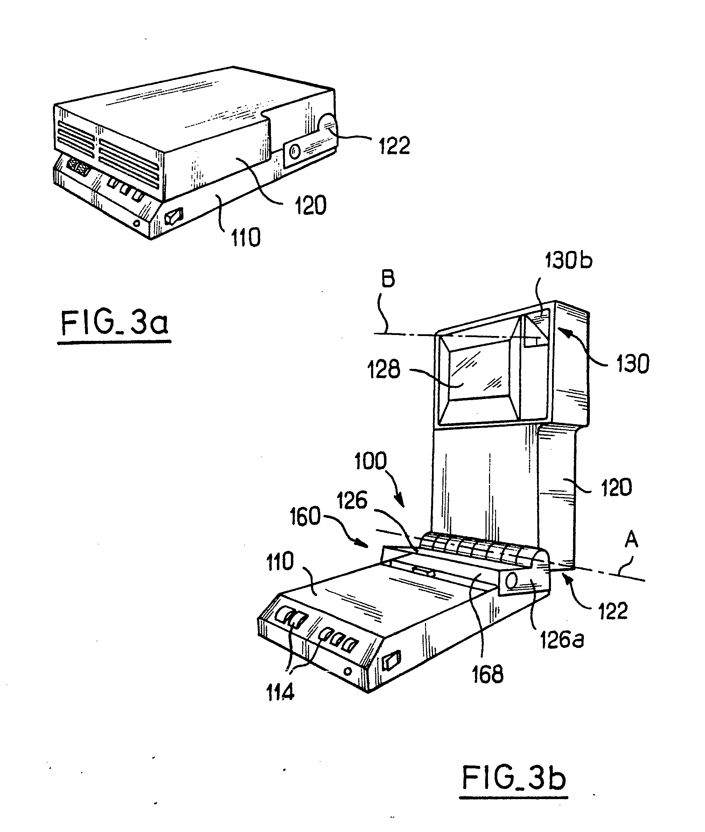

On a représenté sur les figures 3a et 3b un terminal de type visiophone selon un troisième mode de réalisation de l'invention.

Il comprend un boîtier 100 constitué par deux parties 110, 120 essentiellement parallélépipédiques dans le présent exemple, reliées l'une à l'autre par une articulation 122 autour d'un axe A essentiellement horizontal.

La partie 110, par laquelle le terminal repose sur une surface de support, comporte un ensemble de boutons et molettes de contrôle 114 dans sa région antérieure, et reçoit la partie électronique du terminal.

La partie 120 comporte dans sa partie supérieure (dans la position ouverte de la figure 3b) l'écran 128 et l'optique 130 de la caméra. Cette dernière est disposée verticalement dans la partie mobile 120 et l'optique comprend un miroir de renvoi 130b incliné à environ 45°.

Enfin, un dispositif d'éclairage d'appoint 160 est prévu dans la région postérieure de la partie fixe 110 du boîtier, à proximité de la liaison articulée 122, et comprend une source lumineuse (non visible) reçue dans une cavité appropriée, une plaque translucide 168 fermant la cavité et un volet réglable 126 articulé par deux parties latérales verticales 126a sur l'axe A de la liaison articulée 122.

Enfin, un curseur linéaire 144 commandant un variateur électronique (non représenté) permet de faire varier l'intensité de la lumière délivrée par la source lumineuse.

De façon préférée, l'articulation 122 est du type à frottement doux, et la partie mobile 120 peut prendre par pivotement une première position dite position de sommeil (figure 3a) dans laquelle elle repose contre la partie 110, l'écran 128 et l'optique 130 étant ainsi protégés de l'environnement et le terminal ayant un encombrement réduit, et l'une parmi une infinité de positions d'utilisation (figure 3b), dans laquelle la partie mobile 120 est essentiellement dégagée de la partie fixe 110.

En faisant varier l'inclinaison de la partie mobile 120 autour de l'axe A, on fait varier la direction de visée B de la caméra, pour ainsi adapter le terminal d'une manière extrêmement simple et aisée à des utilisateurs de statures ou de postures différentes.

Pour plus de détails concernant cette réalisation, on se reportera à la demande de brevet déposée le même jour que la présente demande aux noms de GUICHARD, BUCHNER et LABAT et ayant pour titre : "Terminal de communication visuelle et sonore, notamment visiophone, à boîtier articulé".

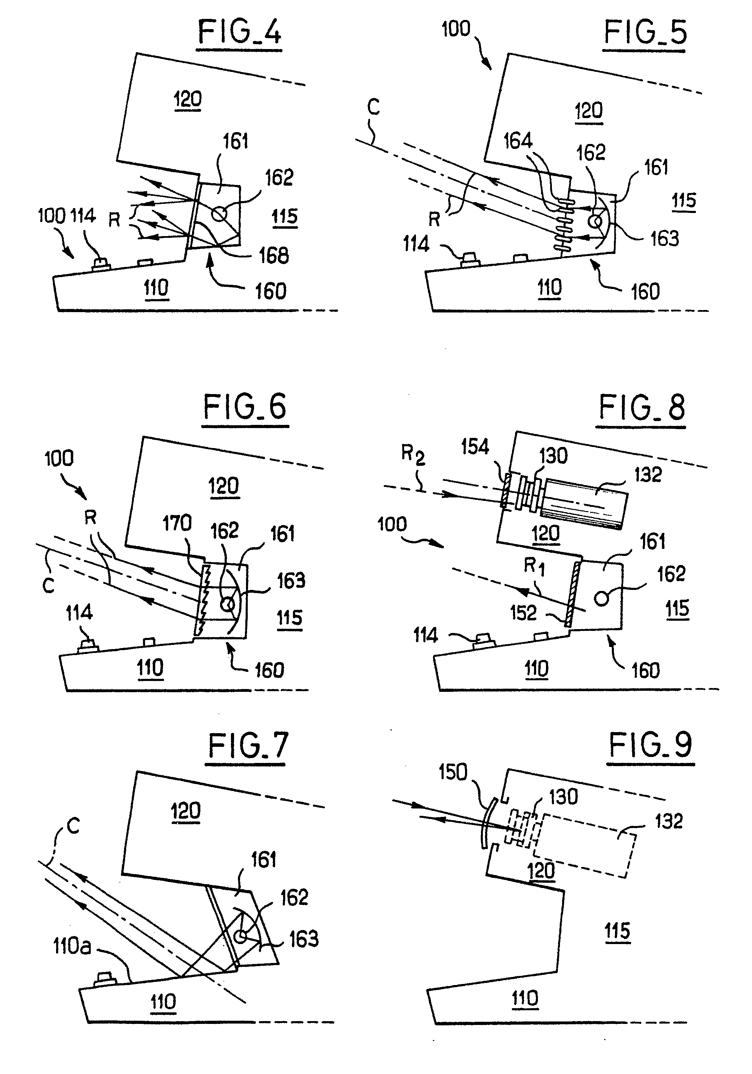

On a représenté sur les figures 4 à 7 divers modes d'exécution d'un dispositif d'éclairage d'appoint incorporé à un terminal visuel conformément à la présente invention, et plus particulièrement à un terminal selon la première ou la seconde forme de réalisation de la présente invention.

En référence tout d'abord à la figure 4, l'éclairage d'appoint 160 comprend, dans une cavité 161 à parois réfléchissantes, une source lumineuse 162, par exemple tubulaire. La cavité est fermée à l'avant par une plaque translucide 168 formant diffuseur, éventuellement colorée, de telle sorte qu'un faisceau lumineux de rayons R multidirectionnels est formé à la sortie du dispositif.

Les rayons montants rencontrent le haut du corps de l'interlocuteur, pour atténuer les zones d'ombre créées principalement sur le visage de celui-ci par l'éclairage ambiant plongeant généralement rencontré.

Les rayons descendants éclairent la surface de support du terminal, telle qu'une table, en avant dudit terminal, et constituent donc avantageusement un éclairage d'appoint pour lecture ou écriture d'un document par l'utilisateur.

Sur la figure 5, le dispositif d'éclairage d'appoint comprend, dans une cavité 161, une source lumineuse 162 associée à un réflécteur 163 par exemple du genre parabolique pour engendrer un faisceau de rayons lumineux essentiellement parallèles à une direction horizontale ou proche de l'horizontale. On trouve également un ensemble de volets 164 analogues à ceux des figures 1 et 2 qui ont pour objet de dévier relativement uniformément, par réflexion sur leur face intérieure, une partie substantielle des rayons lumineux, pour créer à la sortie du dispositif d'éclairage un faisceau de rayons montants ayant une direction générale d'émission C d'inclinaison choisie.

Cette configuration des moyens d'éclairage d'appoint 160 permet avantageusement de régler l'inclinaison du faisceau montant en fonction de la stature ou de la posture de l'interlocuteur, par un simple réglage de la position des volets.

La figure 6 représente un dispositif d'éclairage d'appoint comprenant, outre la source lumineuse 162 et le réflecteur 163 reçus dans la cavité 161, une glace frontale 170 comportant un ensemble de prismes horizontaux effectuant par réfraction la déviation du faisceau lumineux pour lui donner l'inclinaison requise vers le haut (axe C).

Enfin, dans le dispositif d'éclairage représenté sur la figure 7, la source lumineuse (lampe 162) émet, par exemple en combinaison avec un réflecteur 163, un rayonnement lumineux orienté essentiellement en biais vers le bas, en direction de la surface supérieure 110a de la partie inférieure 110 du boîtier. Cette surface supérieure présente un caractère réfléchissant suffisant pour réfléchir les rayons lumineux, avec éventuellement un certain degré de diffusion, vers le haut en direction de l'interlocuteur (axe C).

Ainsi, la surface 110a peut soit comporter un miroir, soit recevoir une couche d'un revêtement ayant un coefficient de réflexion élevé.

Cette solution est avantageuse en ce que l'effet de diffusion précité peut atténuer l'éblouissement de l'interlocuteur. Elle permet également de contourner par le bas la partie supérieure 120 du boîtier lorsque cette dernière est fortement en saillie vers l'avant.

Bien entendu, les moyens d'éclairage peuvent prendre toute autre forme et notamment incorporer pour former le faisceau des moyens concentrateurs du genre lentille de Fresnel.

Le dispositif d'éclairage 160 peut être commandé manuellement par l'utilisateur. Par exemple, l'inclinaison des volets par le bouton 166 (figure 1) ou le réglage de l'intensité de la lumière par le curseur 144 (figure 3b) permettent de moduler l'éclairage d'appoint en fonction de la directivité et/ou de l'intensité de l'éclairage ambiant, qu'il soit naturel ou artificiel.

Afin d'aider l'utilisateur à effectuer correctement le réglage, il est particulièrement avantageux de prévoir dans le terminal une fonction d'auto-contrôle d'image qui permet à l'interlocuteur d'observer temporairement sur l'écran sa propre image.

Mais le dispositif d'éclairage d'appoint 10, peut également être commandé de façon automatique. Par exemple, le capteur de face avant 167 (figure 2) peut engendrer un signal électrique représentatif de la luminosité moyenne du visage de l'utilisateur. Ce signal électrique peut être traité pour commander un variateur électronique relié à la source lumineuse pour ainsi moduler l'intensité lumineuse délivrée jusqu'à ce que la luminosité mesurée par le capteur 167 atteigne une valeur de consigne.

Un tel signal peut également, par exemple dans les réalisations des figures 1 et 2, commander un moteur électrique apte à faire varier l'inclinaison des volets 164.

Lorsque ces volets agissent simplement comme des obturateurs variables, on asservit la quantité de lumière d'appoint délivrée à l'utilisateur à la luminosité mesurée.

En revanche, lorsque les volets agissent comme déviateurs variables des rayons lumineux, on asservit la direction du faisceau d'appoint engendré à la luminosité mesurée, jusqu'à ce qu'elle prenne la valeur requise.

Bien entendu, on peut également prévoir plusieurs cellules de directivités différentes permettant de détecter le caractère non homogène de l'élairage ambiant.

On peut noter ici que l'utilisation d'obturateurs mécaniques tels que des volets présente l'avantage suivant lequel, quel que soit le réglage effectué pour moduler le flux lumineux émis, la répartition spectacle de la lumière reste sensiblement la même, ce qui n'est pas toujours le cas lorsque la variation du flux est obtenue électriquement, en abaissant par exemple la tension. Ainsi, cette solution mécanique permet de ne pas modifier l'équilibre chromatique de l'image et donc de ne pas nécessiter la modification des réglages de chromatisme au sein du terminal local ou distant.

Selon un autre aspect encore de le présente invention, et maintenant en référence à la figure 8, il est prévu des moyens pour éviter que l'éclairage d'appoint décrit ci-dessus n'occasionne dans l'image obtenue des reflets indésirables, par exemple sur les verres d'une paire de lunettes portée par l'interlocuteur.

Ces moyens comprennent de façon préférée un polariseur 152 qui, dans le présent exemple, est disposé à la sortie de la cavité 161 recevant le dispositif d'éclairage d'appoint 160 ainsi qu'un polariseur analyseur 154 disposé devant l'optique 130 de la caméra 132. La polarisation peut être de type linéaire ou circulaire. On élimine ainsi les réflexions spéculaires sur les verres précités, et donc les reflets indésirables.

En référence maintenant à la figure on peut observer que, du fait que l'écran 128 et l'optique 130 de la caméra sont disposés côte-à-côte, le sujet a le plus souvent tendance à être situé en face de l'écran, et donc décalé latéralement par rapport à l'axe B de l'optique 130 lorsque ledit axe est perpendiculaire à la surface de l'écran.

A cette position décalée vient se superposer le fait que, l'objectif de la caméra ayant généralement une focale très courte, de l'ordre de 8 à 10 mm, il se produit une déformation des lignes parallèles situées dans le champ de prise de vue, par effet de parallaxe.

Des moyens pour compenser ce défaut d'alignement et pour effectuer la correction de parallaxe requise, conformément à un autre aspect de la présente invention, consistent à donner à l'optique et au plan de l'élément photosensible de la caméra des orientations judicieusement choisies, comme on va le voir ci-dessous.

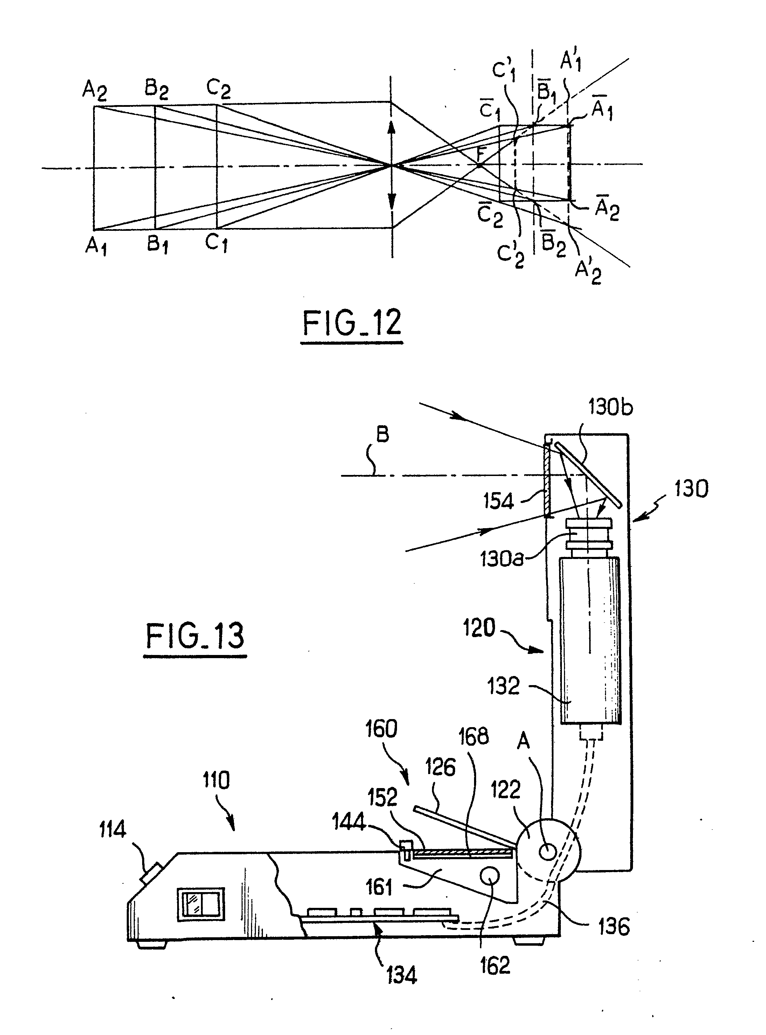

Sur les figures 11 et 12, on a représenté géométriquement la solution conforme à la présente invention pour pallier cette difficulté

Selon l'invention, l'axe B′ de l'objectif, ici schématisé par la lentille 130a, est dirigé de biais, avec un angle β choisi en fonction notamment de la largeur de l'écran 128 et de la distance du sujet 200 à ce dernier.

La face du sujet 200 et l'arrière-plan visualisé sont schématisés par le rectangle vertical A1A2C2C1 (droite AC sur la figure 11), parallèle à l'écran 128 et donc en biais par rapport à l'objectif. Son image se forme en A′C′ (figure 11) et A′1A′2C′2C′1 (figure 12), et on peut observer que, par la cause du défaut d'alignement précité, elle est fortement trapézoïdale. Si le plan sensible de la caméra était parallèle à l'objectif 130a, alors l'image du rectangle A1A2C2C1 (droite A″C″ sur la figure 11) serait également trapézoïdale.

Conformément à l'invention, on fait pivoter le plan sensible 132a de la caméra autour d'un axe vertical contenu dans ledit plan et croisant l'axe de l'objectif, de telle sorte que le plan sensible (plan image réel) soit maintenant essentiellement parallèle à l'objet dont l'image est à restituer (rectangle précité), c'est-à-dire essentiellement parallèle à l'écran 128 ou à la face avant du terminal.

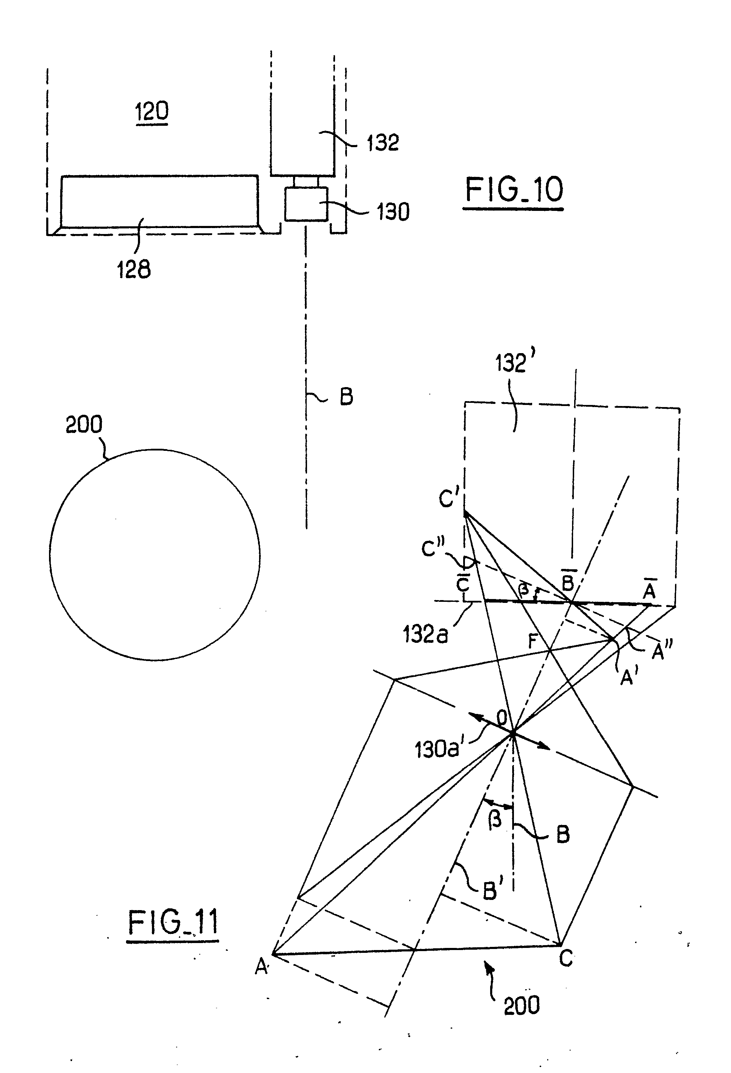

L'image du rectangle objet devient donc $\overline{A}_1\overline{A}_2\overline{C}_2\overline{C}_1$ (figure 12) et $\overline{AC}$ (figure 11) et est donc également un rectangle, comme le montrent les tracés géométriques des figures 10 et 12.

On compense ainsi d'une manière simple et peu onéreuse l'erreur de visée, due au fait que la caméra effectue les prises de vue de l'utilisateur de biais, en inclinant l'objectif pour que sa nouvelle direction de visée B′ soit dirigée selon le biais précité, le plan sensible virtuel de la caméra restant essentiellement parallèle à l'écran.

Selon l'invention, des moyens sont en outre prévus pour aider l'interlocuteur à s'orienter correctement par rapport au terminal, et en particulier à l'axe de visée de la caméra pour lui permettre ainsi d'exercer un auto-contrôle permanent de cadrage.

Selon un premier aspect de l'invention, ces moyens comprennent, en référence à la figure 9, un miroir semi-réfléchissant 150 mis en place devant l'optique 130 de la caméra. Ce miroir est de préférence sphérique et convexe, afin de donner à l'utilisateur une image relativement large par les rayons qu'il réfléchit, les autres rayons étant captés normalement par la caméra pour conduire à la formation de l'image à transmettre.

De préférence, un ou plusieurs repères, par exemple gravés dans le verre à la surface extérieure du miroir, permettent à l'interlocuteur de se déplacer en hauteur ou latéralement jusqu'à ce que l'image d'une partie de son corps, par exemple de sa tête, vienne prendre une position déterminée par rapport audit repère.

On peut prévoir alternativement un miroir à réflexion totale disposé au voisinage de l'optique de la caméra.

En outre, on peut noter que l'analyseur 154 décrit plus haut en référence à la figure 8 pourra tenir lieu lui-même de miroir semi-réfléchissant.

Par exemple, le repère peut être un cercle dans lequel, par déplacement, l'utilisateur vient centrer l'image de sa tête.

Dans une variante de réalisation de l'invention, les moyens d'assistance au positionnement sont constitués par le moniteur lui-même. Plus précisément, si l'on utilise pour celui-ci un écran à cône d'observation réduit, l'utilisateur peut effectuer son auto-positionnement en se déplaçant jusqu'à ce que l'image qu'il perçoit sur ledit écran soit de qualité optimale. Typiquement, un tel cone d'observation réduit peut avoir un demi-angle au sommet de l'ordre de 5 à 15°. Par exemple, il peut s'agir d'un écran à cristaux liquides.

On peut rappeler qu'un écran à cristaux liquides à cône d'observation réduit se caractérise par une formation nettement dégradée de l'image lorsque la direction d'observation réelle présente un écart excessif par rapport à une direction d'observation privilégiée perpendiculaire au plan de la couche de cristaux liquides. Plus précisément, dès que les rayons lumineux émis par l'écran sont excessivement inclinés par rapport à ce même plan, alors l'effet de changement de polarisation de la lumière par excitation/désexcitation des cristaux ne permet pas d'obtenir, à la sortie de l'analyseur, un contraste satisfaisant.

Ainsi, un inconvénient bien connu de certains écrans à cristaux liquides est ici transformé en avantage en permettant un alignement aisé de l'interlocuteur sur le terminal.

Une autre solution pouvant être adoptée pour l'écran à cône d'observation réduit consiste en un écran à tube cathodique ordinaire équipé à sa surface de micro-persiennes ou analogues ne laissant sortir les rayons lumineux que dans le cône d'observation souhaité. On prévoira par exemple un réseau de micro-persiennes horizontales et verticales entrelacées.

On a représenté sur la figure 13 une vue de côté en coupe partielle du terminal des figures 3a et 3b.

On peut observer la position verticale de la caméra 132 et l'optique de la caméra 132 constituée par l'objectif 130a et le miroir de renvoi 130b.

On observe également l'ensemble électronique 134 du terminal, son faisceau 136 de câbles de raccordement avec la caméra et l'écran, la source lumineuse 162 reçue dans sa cavité 161, la plaque translucide 168 et le volet 126 qui permet, par pivotement autour de l'axe A, un réglage manuel de la directivité du faisceau d'éclairage d'appoint, tandis que le déplacement du curseur 144 permet le réglage de l'intensité lumineuse. Sur cette figure sont également représentés le polariseur 152, contre la plaque translucide 168 et l'analyseur 154 devant le miroir de renvoi 130b.

Enfin, on peut noter qu'un terminal de type visiophone conforme à l'invention pourra être utilisé soit en association avec un poste téléphonique de type classique (cas du terminal de la figure 1), avec une interconnexion appropriée, soit en intégrant un tel poste téléphonique (cas du terminal de la figure 2). De préférence, la fonction dite "mains libres" sera disponible, afin d'obtenir une communication par l'image et le son de l'interlocuteur sans combiné téléphonique.

Bien entendu, l'invention n'est pas limitée aux formes de réalisations et variantes décrites ci-dessus et illustrées sur les dessins, mais l'homme de l'art saura y apporter toute variante ou modification conforme à son esprit.

En particulier, il est bien entendu que la présente invention s'applique à des terminaux dont la forme, les dimensions et l'architecture et l'organisation interne sont quelconques.

## Revendications

1. Terminal de table pour communication visuelle et sonore, du type associé notamment à un poste téléphonique et comprenant, dans un boîtier (100), un moniteur à écran de visualisation (128), une caméra (132) munie d'une optique (130), un ensemble électronique de commande, de codage/décodage et d'interfaçage avec une ligne de transmission et des moyens de contrôle manuel, caractérisé en ce que, pour compenser l'éclairement d'un interlocuteur dans un environnement à éclairage ambiant plongeant, et ainsi obtenir une image équilibrée dudit interlocuteur par ladite caméra, le terminal comprend en outre un dispositif d'éclairage d'appoint (160) ayant une direction générale d'émission (C) essentiellement inclinée vers le haut en direction de l'interlocuteur et des moyens de réglage du flux lumineux émis par ledit dispositif en fonction de l'éclairage ambiant.

2. Terminal selon la revendication 1, caractérisé en ce que le dispositif d'éclairage d'appoint comprend une source lumineuse (162) et une plaque translucide formant diffuseur (168).

3. Terminal selon la revendication 1, caractérisé en ce que le dispositif d'éclairage d'appoint comprend une source lumineuse (162), un réflecteur (163) et des moyens (164;170) de déviation verticale des rayons lumineux.

4. Terminal selon la revendication 3, caractérisé en ce que les moyens de déviation verticale comprennent un ensemble de prismes (170).

5. Terminal selon la revendication 4, caractérisé en ce que les moyens de déviation verticale comprennent des volets horizontaux (164) d'orientation réglable.

6. Terminal selon la revendication 1, caractérisé en ce que le boîtier comprend en outre une surface (110a) s'étend en avant et en dessous du dispositif d'éclairage d'appoint, et qui tient lieu de surface réfléchissante pour des rayons lumineux émis par ledit dispositif vers ladite surface.

7. Terminal selon l'une des revendications 2 à 5, caractérisé en ce que les moyens de réglage agissent sur l'intensité de la source lumineuse.

8. Terminal selon l'une des revendications 1 à 6, caractérisé en ce que les moyens de réglage comprennent au moins un volet mobile (126, 164) formant obturateur.

9. Terminal selon l'une des revendications 1 à 8, caractérisé en ce que le boîtier (100) du terminal comprend une partie fixe (110) par laquelle le terminal repose sur une surface de support et une partie mobile (120) reliée par une articulation (122) autour d'un axe (A) essentiellement horizontal à ladite partie fixe et constituant une partie supérieure dans laquelle sont disposés l'écran (128) et l'optique (130) de la caméra, le dispositif d'éclairage d'appoint (160) étant situé dans ladite partie fixe (110) au voisinage de l'articulation.

10. Terminal selon l'une des revendications 1 à 9, caractérisé en ce que les moyens de réglage (144, 166) sont manuels.

11. Terminal selon l'une des revendications 1 à 9, caractérisé en ce que les moyens de réglage sont automatiques et comprennent au moins un capteur photosensible (167).

12. Terminal selon l'une des revendications précédentes, caractérisé en ce qu'il comprend en outre un polariseur (152) disposé à la sortie du dispositif d'éclairage d'appoint et un analyseur (154) disposé à l'entrée de l'optique (130) de la caméra.

13. Terminal selon l'une des revendications 1 à 12, dans lequel l'optique (130) de la caméra (132) est décalée latéralement par rapport à l'écran de visualisation (128), caractérisé en ce qu'il comprend en outre des moyens de correction de parallaxe.

14. Terminal selon la revendication 13, caractérisé en ce que les moyens de correction de parallaxe comprennent un objectif (130a) de la caméra (130), disposé de telle sorte que la direction de visée (B') de la caméra soit inclinée latéralement d'un angle ($\beta$) déterminé, le plan sensible (132a) de ladite caméra étant incliné approximativement du même angle ($\beta$) par rapport au plan perpendiculaire à ladite direction de visée (B').

15. Terminal selon l'une des revendications 1 à 13, caractérisé en ce qu'il comprend en outre des moyens d'assistance au positionnement de l'interlocuteur par rapport à l'axe de visée (B) de la caméra.

16. Terminal selon la revendication 15, caractérisé en ce que les moyens d'assistance au positionnement comprennent un miroir (150) disposé à l'entrée ou au voisinage de l'optique (130) de la caméra (132).

17. Terminal selon la revendication 15, caractérisé en ce que les moyens d'assistance au positionnement sont constitués par l'écran (128), qui est un écran à cône d'observation réduit.

18. Terminal selon la revendication 10, caractérisé en ce qu'il comprend en outre des moyens pour afficher temporairement sur l'écran (128) l'image prise par la caméra (132) afin de permettre à l'interlocuteur d'équilibrer sa propre image à l'aide des moyens de réglage manuels.

FIG_1

FIG_2

## FIG_3a

## FIG_3b

# FIG_4

# FIG_5

# FIG_6

# FIG_8

# FIG_7

# FIG_9

120

132

130

128

B

200

FIG_10

FIG_11

132'

C'

C"

C̄

B̄

Ā

β

132a

F

A"

A'

0

130a'

β

B

B'

A

C

200

## FIG_12

## FIG_13

Office européen
des brevets

**RAPPORT DE RECHERCHE EUROPEENNE**

Numero de la demande

EP  88 40 2376

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,X | EP-A-0 231 403  (BISELLI) <br> * Colonne 3, lignes 22-32; figure 1 * | 1 | H 04 N    7/14 |
| Y | | 9-11,13 ,15-18 | |
| A | GB-A-1 298 853  (ZANUSSI) <br> * Page 2, ligne 90 - page 3, ligne 4 * | 2 | |
| D,A | FR-A-  914 843  (SCOPHONY) <br> * Page 2, lignes 95-104 * | 3 | |
| A | US-A-3 843 835  (MOSCA) <br> * Colonne 2, lignes 49-54 * | 6 | |
| D,Y | US-A-4 485 400  (LEMELSON) <br> * Colonne 2, lignes 44-55; figure 6 * | 9-11 | |
| Y | DE-C-3 329 493  (TELEFONBAU UND NORMALZEIT) <br> * Colonne 2, lignes 36-46 * | 13,18 | |
| Y | DE-A-2 319 798  (SIEMENS) <br> * Page 4, lignes 3-8; page 6, lignes 7-11 * | 15,16 | DOMAINES TECHNIQUES RECHERCHES (Int. Cl.4) <br><br> H 04 N |
| A | US-A-2 909 600  (BECKER) <br> * Colonne 5, lignes 17-20; colonne 7, lignes 6-12 * | 16 | |
| Y | US-A-3 544 715  (HERRIOTT) <br> * Colonne 1, lignes 27-38 * | 17 | |

Le présent rapport a été établi pour toutes les revendications

| Lieu de la recherche | Date d'achèvement de la recherche | Examinateur |
|---|---|---|
| LA HAYE | 15-12-1988 | DE ROECK A.F.A. |